# DEMANDE DE BREVET EUROPEEN

(11) **EP 2 764 772 A1**
(43) Date de publication de la demande: **13.08.2014**
(21) Numéro de dépôt: 14154091.4
(22) Date de dépôt: 06.02.2014
(51) Int. Cl.: A01K 31/00, A01K 39/06

(54) **Cage de transport de volailles notamment de palmipèdes**

(30) Priorité: 08.02.2013 FR 1351090
(71) Demandeur: Avilog, 85140 Sainte-Florence (FR)
(72) Inventeur: Chabot, Christophe, 64230 MOMAS (FR)
(74) Mandataire: Fragnaud, Aude

(57) **Abrégé**

La présente invention concerne une cage de transport pour volailles ou lapin et en particulier pour palmipèdes ainsi qu'une cage collective adaptée pour recevoir une telle cage de transport. La cage de transport (100) comprend un plancher (110) ajouré, une façade avant (150), une façade arrière (120), deux parois latérales (140) dont l'une au moins comprend une trappe latérale (141), et un couvercle (130) pourvu d'une trappe supérieure (131). La façade arrière (120) est mobile en rotation, autour d'un axe (122) situé le long du bord arrière dudit plancher (110), entre une position fermée où ladite façade arrière est relevée et une position ouverte où ladite façade arrière est abaissée dans le prolongement dudit plancher. Le couvercle (130) est mobile en translation entre une position fermée et une position ouverte où ledit couvercle est déplacé vers ladite façade avant (150). Cette cage de transport amovible est destinée à s'encastrer dans des logements prévus dans des cages collectives et faire partie intégrante desdites cages collectives. La cage de transport permet ainsi de transporter les palmipèdes d'une cage collective à une autre, sans avoir besoin de les manipuler.

## Description

L'invention concerne le domaine de l'aviculture et plus précisément celui des cages destinées aux volailles et lapins et en particulier aux palmipèdes élevés en vue d'être gavés.

Plus particulièrement, l'invention concerne une cage de transport pour palmipèdes, ainsi qu'une cage collective pour palmipèdes.

Selon la directive Européenne 98/58 relative à la protection des animaux dans les élevages, les palmipèdes, oies et canards essentiellement, doivent être placés dans des cages collectives c'est-à-dire des cages suffisamment spacieuses pour accueillir plusieurs palmipèdes tout en leur procurant un espace suffisant pour leur permettre de s'ébattre. Ainsi, les palmipèdes conservent des contacts sociaux, ils peuvent bouger, étendre leurs ailes et ils doivent également pouvoir s'arroser grâce à un abreuvoir judicieusement placé sur une paroi de la cage. En pratique, l'espace au sol doit être d'environ 1250 cm² par animal. On compte en général entre 4 et 6 palmipèdes par cage collective.

Il existe aujourd'hui de nombreuses cages collectives qui répondent aux exigences de cette directive Européenne. Ces cages comportent toutes un système permettant de confiner les palmipèdes dans un espace réduit pendant les opérations d'alimentation forcée, dite de gavage.

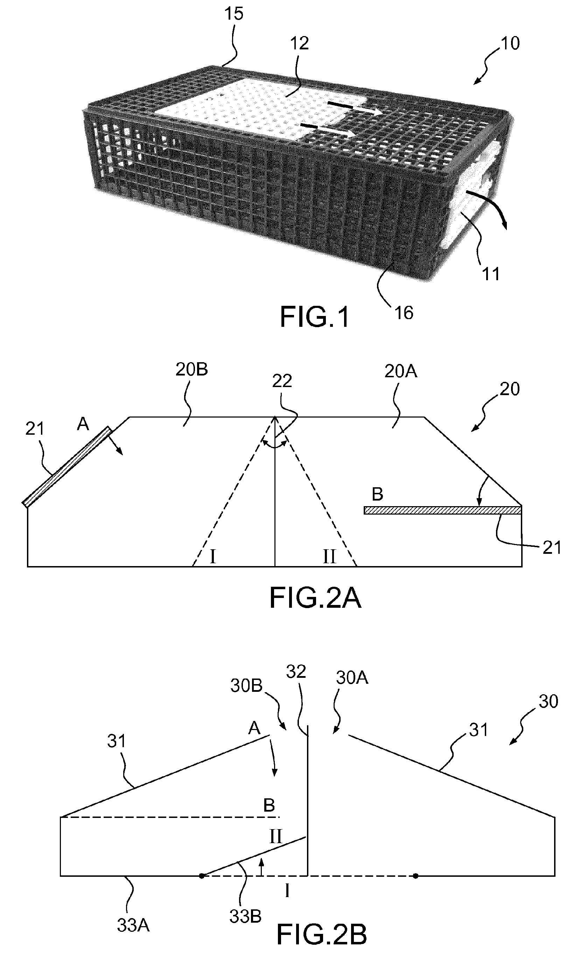

Les Figures 2A et 2B schématisent deux exemples de cages collectives existantes vues en coupe. Les cages collectives destinées au gavage des palmipèdes doivent permettre aux animaux de pouvoir s'ébattre en dehors des périodes de gavage, et permettre de maintenir les animaux confinés au moment de leur gavage. Pour cela, les cages collectives existantes disposent en général d'un système permettant de forcer les animaux à avancer vers la face avant de la cage, tandis qu'un abattant, prévu du côté de la face avant, se rabaisse pour maintenir les animaux en place. Les cages collectives sont en général divisées en deux espaces séparés l'un de l'autre par une cloison arrière commune.

Plus précisément, et selon un premier exemple de réalisation illustré par la Figure 2A, la cage 20 comprend deux espaces 20A, 20B séparés par une cloison arrière 22 commune. La cloison arrière commune 22 est mobile en rotation autour d'un axe situé dans le toit, entre une position sensiblement verticale et deux positions, référencées I et II, inclinées vers l'une ou l'autre des parois avant des deux espaces 20A, 20B. Au moins une partie des parois avant de chaque espace comprend en outre un abattant 21 mobile entre une position relevée, référencée A, et une position abaissée, référencée B. Ainsi, au moment du gavage des animaux, la cloison arrière 22 s'incline dans une position II pour forcer les palmipèdes à avancer vers une paroi avant d'un des deux espaces 20A, puis l'abattant 21 de la paroi avant est abaissé en position B, de sorte que les palmipèdes sont confinés dans un espace restreint, leur tête et leur cou dépassant à travers les barreaux de l'abattant 21 pour permettre leur gavage. Une telle cage est décrite dans la demande de brevet EP2123152 par exemple.

Sur la Figure 2B, illustrant un deuxième exemple de réalisation de cage collective existante, la cage 30 comprend aussi deux espaces 30A, 30B, séparés par une cloison arrière commune 32. La paroi avant comprend, dans ce cas aussi, un abattant 31 mobile entre une position relevée A et une position abaissée B. En revanche, le système pour faire avancer les palmipèdes vers la paroi avant de la cage diffère de celui de la Figure 2A, par le fait que ce n'est pas la cloison arrière commune 32 qui bouge, mais une partie arrière 33B du plancher de la cage. Une partie 33B du plancher de la cage est donc mobile entre une position abaissée I et une position relevée II, forçant les palmipèdes à avancer vers une zone située à l'avant de la cage où le plancher 33A est sensiblement horizontal. Une telle cage est décrite dans la demande de brevet FR 2943495 par exemple.

La directive Européenne ne stipule rien concernant le transport des volailles et notamment des palmipèdes. Or, aujourd'hui, le Déposant a fait le constat que les palmipèdes sont manipulés régulièrement, du lieu d'élevage jusqu'au lieu d'abattage. Ainsi, les palmipèdes sont placés pour être transportés dans des cages collectives de transport à plusieurs reprises au cours de leur vie ce qui soulève le problème de manipulation à répétition générant stress et blessures parfois, mais aussi une perte de temps pour les exploitants et une pénibilité accrue de leur travail. En effet, les poussins sont transportés une première fois depuis leur lieu de naissance jusqu'à leur lieu d'élevage. Puis ils sont transportés une deuxième fois depuis leur lieu d'élevage jusqu'à leur lieu de pré-gavage, puis de leur lieu de pré-gavage vers leur lieu de gavage. Enfin, ils sont transportés une dernière fois depuis leur lieu de gavage vers leur lieu d'abattage.

Les cages de transport existantes comprennent une ou deux trappes par lesquelles les animaux sont attrapés ou déposés. La Figure 1 schématise une telle cage de transport 10. Une telle cage comprend des parois verticales 16, un plancher et un toit 15 qui sont ajourés pour permettre aux animaux de respirer et d'être suffisamment ventilés. De plus les ouvertures pratiquées dans le plancher permettent d'éviter l'accumulation de souillures qui sont évacuées naturellement par gravité. La cage comprend en général une trappe latérale 11 et une trappe supérieure 12 située dans le toit 15. Cette trappe supérieure 12 peut être coulissante, tel qu'illustré sur le schéma de la Figure 1, où la trappe coulisse selon le sens des deux flèches représentées. La trappe supérieure 12 peut en outre s'ouvrir vers l'extérieur, par rotation autour d'un axe situé dans le toit 15.

Le document US2065416 décrit une cage compatible pour le transport de volailles, comprenant un plancher ajouré, une façade avant, une façade arrière, deux parois latérales et un couvercle pourvu d'une trappe supérieure. La façade arrière de cette cage est en outre mobile en rotation autour d'un axe situé le long du bord arrière du plancher, entre une position fermée où la façade arrière est relevée et une position ouverte où la façade arrière est abaissée dans le prolongement du plancher, de sorte qu'un exploitant peut introduire les volailles dans la cage par cette ouverture.

Le document US1087414 décrit une cage de transport comprenant un plancher, des façades avant et arrière qui comprennent une portion interne ajourée et coulissante formant une trappe, et un couvercle coulissant. Les ouvertures créées par les trappes et par le couvercle coulissant permettent à un exploitant d'insérer ses volailles à l'intérieur de la cage.

Le document FR2619282, quant à lui, décrit une cage destinée à l'élevage et au transport de volailles. Cette cage comprend une batterie de compartiments, dans laquelle chaque compartiment permet de loger une seule volaille pendant la période d'engraissement. Cette cage comprend donc des compartiments individuels. Elle n'est donc pas collective. Cette cage est supportée par une armature sur roulettes. La cage peut être facilement retirée de l'armature afin d'être transportée. Une telle cage ne constitue cependant pas une cage de transport très pratique car elle n'est pas empilable, ou gerbable, pour permettre un transport par camion. Or les volailles sont transportées, à plusieurs reprises, au cours de leur vie, du lieu d'élevage jusqu'au lieu d'abattage. En outre, la cage décrite dans ce document est trop encombrante pour être transportée avec les volailles qu'elle contient.

Les animaux sont donc régulièrement manipulés pour être déplacés d'une cage à une autre, en vue de leur transport d'un lieu vers un autre. De telles manipulations à répétition sont sources de stress pour les animaux, et cela peut se traduire soit par des blessures et/ou par un taux de mortalité trop important. Dans le cas de blessures ou de stress important, la qualité de la viande peut s'en ressentir.

L'invention a donc pour but de remédier aux inconvénients de l'art antérieur en proposant une cage unique qui puisse servir lors du transport mais aussi lors des différentes étapes de l'aviculture, afin d'éviter les manipulations à répétition des animaux et de minimiser ainsi leur stress, tout en limitant la pénibilité du travail des exploitants.

A cet effet, l'invention a pour objet une cage de transport de volailles comprenant un plancher ajouré, une façade avant, une façade arrière, deux parois latérales dont l'une au moins comprend une trappe latérale, et un couvercle pourvu d'une trappe supérieure, ladite cage de transport étant caractérisée en ce que :
- la façade arrière est mobile en rotation, autour d'un axe situé le long du bord arrière dudit plancher, entre une position fermée où ladite façade arrière est relevée et une position ouverte où ladite façade arrière est abaissée dans le prolongement dudit plancher,
- le couvercle est mobile en translation entre une position fermée et une position ouverte où ledit couvercle est déplacé vers ladite façade avant.

La cage de transport est destinée à s'encastrer dans une cage collective. Ainsi, la façade arrière de la cage de transport peut s'ouvrir et faire partie intégrante du plancher d'une cage collective, et le couvercle peut également s'ouvrir afin de procurer aux palmipèdes un espace suffisant pour qu'ils puissent se redresser et s'ébattre.

Selon d'autres caractéristiques optionnelles de la cage de transport :
- le couvercle comprend des ergots situés aux extrémités de son bord arrière, lesdits ergots étant aptes à coulisser le long de rails latéraux pratiqués le long des parois latérales,
- les rails latéraux sont évasés, à leur extrémité avant, située du côté de ladite façade avant, pour permettre un retrait desdits ergots de leurs rails respectifs,
- la trappe du couvercle s'ouvre en rotation, autour d'un axe coplanaire audit couvercle, et bascule vers ladite façade arrière de ladite cage de transport, alors que ledit couvercle s'ouvre en coulissant vers ladite façade avant de ladite cage de transport,
- la cage comprend en outre un système distant de fermeture de ladite façade arrière, ledit système de fermeture comprenant au moins un câble fixé à ladite façade arrière, ledit au moins un câble étant disposé le long d'au moins un guide prévu dans au moins une paroi latérale et débouchant sur ladite façade avant,
- ledit au moins un guide est confondu avec au moins un rail latéral de coulissement dudit couvercle,
- chaque trappe et paroi mobile est pourvue d'un système de verrouillage choisi parmi au moins l'un des moyens suivants : clips, ressort de rappel, loquet,
- la cage est réalisée dans l'un au moins des matériaux suivants : polyéthylène haute densité (PEHD), acrylonitrile butadiène styrène (ABS), acier galvanisé ou acier inoxydable.

L'invention se rapporte en outre à une cage collective pour le gavage de palmipèdes, comportant un plancher, deux parois latérales, une paroi arrière, au moins une paroi avant dont au moins une partie comprend un abattant mobile autour d'un axe de rotation, entre une position relevée et une position abaissée, ladite cage collective étant caractérisée en ce qu'elle comprend en outre au moins un logement, situé entre ledit plancher et ledit axe de rotation de l'abattant mobile de ladite paroi avant, ledit logement comprenant une cage de transport de volailles, amovible, telle que décrite ci-dessus.

Ainsi, les cages collectives existantes sont adaptées pour intégrer un logement destiné à la cage de transport. La cage de transport forme alors une partie amovible et transportable de la cage collective.

Selon d'autres caractéristiques optionnelles de la cage collective :
- la cage comprend un système de confinement apte à forcer les palmipèdes à avancer vers sa paroi avant et à les faire entrer dans une zone délimitée par le plancher de ladite cage de transport,
- lorsque la cage de transport est insérée dans son logement, son couvercle est coulissé vers sa façade avant et dépasse vers l'extérieur de ladite cage collective,
- une fois la cage de transport insérée dans son logement, son couvercle est retiré.

D'autres avantages et caractéristiques de l'invention apparaitront à la lecture de la description suivante donnée à titre d'exemple illustratif et non limitatif, en référence aux Figures annexées qui représentent :
- La Figure 1, déjà décrite, un schéma en perspective d'une cage de transport de l'art antérieur,
- Les Figure 2A et 2B, déjà décrites, des schémas en coupe de deux exemples de cages collectives selon l'art antérieur,
- La Figure 3, un schéma de la cage de transport selon l'invention, ladite cage étant ouverte,
- La Figure 4, un schéma en coupe d'une cage collective modifiée selon l'invention pour permettre l'insertion de cages de transport,
- La Figure 5, un schéma en perspective d'une cage collective adaptée pour recevoir au moins une cage de transport.

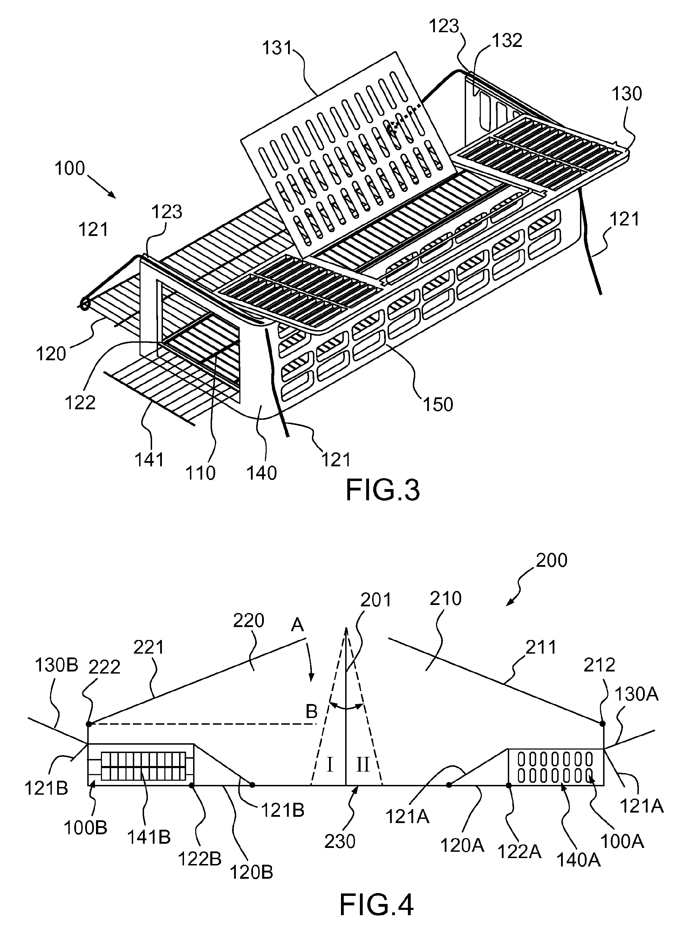

La Figure 3 schématise une vue en perspective d'une cage de transport selon l'invention, lorsque toutes ses parties mobiles sont en position d'ouverture. Cette cage, référencée 100, comprend un plancher ajouré 110, permettant de laisser les souillures s'écouler par gravité. Elle comprend en outre des parois latérales 140, une façade avant 150, une façade arrière 120, et un couvercle 130. Toutes les parois ou façades sont ajourées afin de permettre une ventilation suffisante des animaux.

La distance entre la façade avant 150 et la façade arrière 120 est désignée « profondeur » de la cage, la distance entre les deux parois latérales 140 est désignée « largeur » de la cage, et enfin la distance verticale entre le plancher 110 et le couvercle 130 est désignée « hauteur » de la cage.

Les surfaces du plancher et du couvercle sont délimitées par des bords. On désigne par « bord arrière », le bord d'une surface situé du côté de la façade arrière 120 de la cage. De même on désigne par « bord avant », le bord d'une surface situé du côté de la façade avant 150 de la cage. On désigne par « bord inférieur » d'une façade, un bord situé du côté du plancher 110 de la cage et par « bord supérieur » d'une façade, un bord situé du côté du couvercle 130 de la cage.

Au moins l'une des parois latérales 140, de la cage de transport 100, comprend une porte ou trappe 141. La porte latérale 141 est mobile en rotation autour d'un axe situé dans la paroi latérale 140. Cet axe peut être horizontal tel qu'illustré sur la Figure 3, de sorte qu'en position ouverte la porte 141 est abaissée. Selon une variante cet axe de rotation peut être vertical, de manière à ce que la porte 141 tourne vers l'une des façades avant ou arrière en s'ouvrant.

De manière avantageuse, la façade arrière 120 est mobile autour d'un axe 122 situé le long du bord arrière du plancher 110, entre une position fermée où ladite façade arrière est relevée et une position ouverte où ladite façade arrière est abaissée dans le prolongement dudit plancher, telle qu'illustrée sur la Figure 3. Ainsi, lorsque la cage de transport est encastrée dans une cage collective, la façade arrière 120 est abaissée en position d'ouverture afin de libérer les palmipèdes pour qu'ils puissent circuler dans l'ensemble de la cage collective.

De manière avantageuse, la cage de transport 100 comprend en outre un système de fermeture distant de sa façade arrière 120, afin de permettre la fermeture de la cage de transport avant de l'enlever complètement de la cage collective et d'éviter ainsi qu'un palmipède ne ressorte de la cage de transport au moment de son retrait. Pour cela, le système de fermeture comprend par exemple au moins un câble 121 fixé à la façade arrière 120. Plus particulièrement, il peut être fixé à au moins une extrémité du bord supérieur de ladite façade arrière 120. Le câble 121 est avantageusement disposé le long d'un guide pratiqué le long d'une paroi latérale et débouchant sur la façade avant 150. Ainsi, en tirant sur le câble 121 dépassant par la façade avant, il est possible de relever la façade arrière 120. De préférence, le système de fermeture comprend deux câbles 121 fixés à chaque extrémité du bord supérieur de ladite façade arrière 120 et passant chacun par un guide pratiqué le long de chaque paroi latérale 140. Le guide peut se présenter sous une forme ouverte, telle qu'une rigole 123 par exemple, pratiquée dans le bord supérieur de la paroi latérale, tel que cela est illustré sur la Figure 3. Il peut aussi se présenter sous une forme fermée, telle qu'un fourreau par exemple, usiné dans l'épaisseur de la paroi latérale. Un système de verrouillage supplémentaire permet ensuite de sécuriser la façade pour éviter que les palmipèdes puissent l'ouvrir. Ce système de verrouillage peut par exemple se présenter sous forme de clips ou de loquet par exemple.

Le couvercle 130 comprend une porte 131. Cette porte s'ouvre en rotation autour d'un axe situé dans le couvercle, et s'ouvre vers la façade arrière 120. Le couvercle 130, quant à lui, s'ouvre en translation et coulisse vers la façade avant 150. Pour cela, le couvercle 130 comprend des ergots aux extrémités de son bord arrière. Ces ergots coulissent alors le long de rails 132 disposés le long des parois latérales 140. A leur extrémité avant, située du côté de la façade avant 150, les rails peuvent en outre présenter une forme évasée, de manière à permettre le retrait des ergots de leurs rails respectifs et donc le retrait total du couvercle 130.

Dans une variante de réalisation, chaque guide du système de fermeture distant, prévu pour y faire passer un câble 121, peut être confondu avec un rail 132 de coulissement du couvercle.

Les sens d'ouverture respectifs de la porte 131 et du couvercle 130 sont avantageusement inversés, la porte s'ouvrant vers la façade arrière 120 tandis que le couvercle s'ouvre vers la façade avant 150. Cela permet d'éviter que les animaux ne se blessent, par pincement notamment, lorsque l'on referme la cage 100.

De manière avantageuse, la cage de transport 100 est réalisée dans un matériau résistant aux chocs et suffisamment rigide. Ce matériau est avantageusement choisi parmi au moins l'un des matériaux suivants : du polyéthylène haute densité (PEHD), de l'acrylonitrile butadiène styrène (ABS), de l'acier galvanisé ou de l'acier inoxydable.

De préférence, toutes les parties mobiles susceptibles de s'ouvrir sous la pression des animaux, sont pourvues d'un système de verrouillage. Ce système de verrouillage peut par exemple être choisi parmi l'un des systèmes suivants : clips, loquet, ou ressort de rappel. Si un ressort de rappel est utilisé, il ne peut cependant pas être utilisé pour toutes les parties mobiles. En effet, il ne peut pas être utilisé pour la façade arrière 120 qui doit rester dans une position abaissée pendant tout le temps pendant lequel la cage de transport fait partie intégrante de la cage collective. En revanche, un tel ressort peut être utilisé sur les trappes latérale 141 et supérieure 131, mais il faut cependant être vigilent à ce que les trappes ne se referment pas brutalement au risque de blesser un animal. Les solutions de clips ou de loquet sont préférées car elles permettent d'éviter tout risque de blessure pour les animaux.

La Figure 4 schématise une vue en coupe d'une cage collective adaptée pour recevoir des cages de transport conformes à l'invention. Une telle cage collective, référencée 200, comprend comme dans les cages collectives existantes, deux espaces 210 et 220 séparés par une cloison arrière commune 201. La cage de transport selon l'invention s'adapte à n'importe quel système de confinement existant et en place dans les cages collectives actuelles. Sur le schéma de la Figure 4, ce système de confinement consiste à déplacer la cloison arrière commune 201 dans une position I ou II pour faire avancer les palmipèdes respectivement vers l'avant de l'espace 220 ou de l'espace 210. Au moins une partie de la paroi avant 211, 221 de la cage collective forme en outre un abattant, qui tourne autour d'un axe 212, 222, entre une position relevée A et une position abaissée B, pour contraindre les palmipèdes à ne pas s'ébattre pendant le gavage. Les cages collectives existantes sont avantageusement modifiées, en partie basse, pour y prévoir un logement destiné à recevoir une cage de transport 100A, 100B dans chaque espace 210, 220. Lors de l'insertion des cages de transport dans leur logement respectif, leur couvercle 130A, 130B est relevé puis coulissé vers leur façade avant et l'extérieur de la cage collective. Pour cela, le couvercle 130A, 130B coulisse par un espace situé entre le dessus de la cage de transport 100A, 100B et l'axe de rotation 212, 222 de l'abattant de la paroi avant 211, 221 de la cage collective. Une fois la cage de transport 100A, 100B insérée dans son logement, la façade arrière 120A, 120B est abaissée sur le plancher 230 de la cage collective. Le câble 121A, 121 B est alors tendu et prêt à être actionné par la façade avant de la cage de transport, pour permettre la fermeture de la cage de transport 100A, 100B. Sur la Figure 4, on remarque également que les cages de transport ne comportent qu'une seule trappe latérale 141 B d'un seul côté. Dans une variante, elles peuvent aussi en comporter une de chaque côté.

Grâce à la cage de transport selon l'invention, les palmipèdes ne sont manipulés qu'une seule fois pour les mettre en cage, lors de leur transport vers leur lieu d'élevage. Lors des différents transferts ultérieurs, la même cage de transport est utilisée et insérée dans différentes cages collectives. Au moment de transférer les palmipèdes vers un autre lieu, les palmipèdes sont forcés d'avancer vers l'avant de la cage collective dans une zone délimitée par le plancher 110 de la cage de transport 100. Pour pouvoir forcer les animaux à aller dans cette zone, on se sert avantageusement du système de confinement existant permettant de forcer les palmipèdes à avancer vers l'avant. Ce système peut donc être tout système existant, tel qu'une mise en mouvement de la cloison arrière commune, ou bien une inclinaison du demi plancher arrière de la cage collective par exemple. Lorsque les palmipèdes sont cantonnés dans la zone délimitée par le plancher 110 de la cage de transport, la façade arrière 120 de la cage de transport est refermée en tirant sur le câble 121. Puis, les ergots du couvercle 130 sont replacés dans les rails latéraux 132 de coulissement. Le couvercle 130 est alors coulissé vers la façade arrière de la cage de transport 100, jusqu'à sa fermeture complète. La cage de transport peut alors être retirée de son logement, sans risque de voir un palmipède s'échapper.

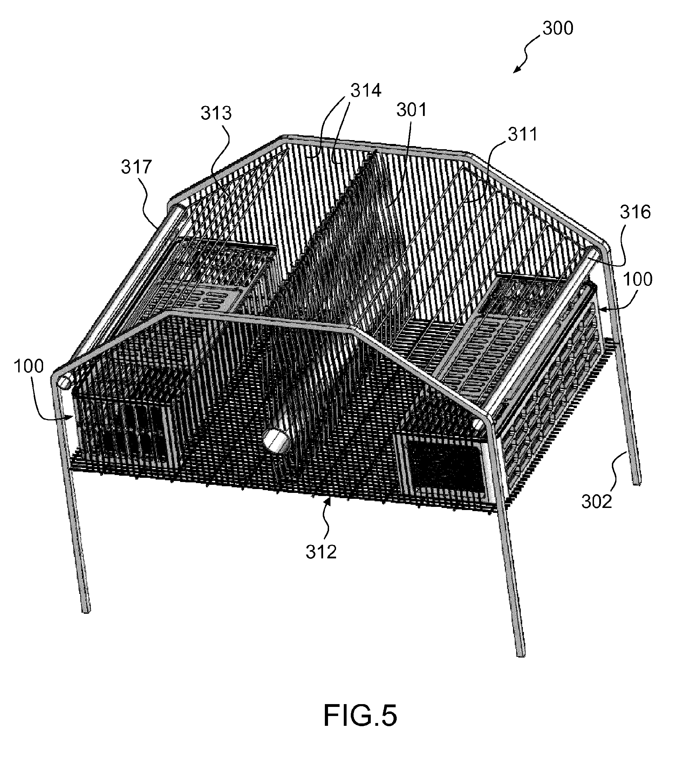

La figure 5 représente une vue en perspective d'une telle cage collective 300 adaptée pour recevoir des cages de transport 100. Sur la Figure 5, les cages de transports 100 insérées dans leur logement respectifs sont encore munies de leur couvercle. L'espace situé entre le dessus de la cage de transport et l'axe de rotation 316, 317 de l'abattant 311, 313 de la paroi avant de la cage collective 300, est suffisamment grand pour y passer une main. Ainsi, même lorsque la cage de transport est en place dans son logement, il est possible de saisir le couvercle, le relever légèrement et le faire coulisser vers l'extérieur de la cage collective. Le couvercle de la cage de transport peut donc être retiré soit au fur et à mesure de l'insertion de la cage de transport 100 dans son logement, soit après son insertion. Sur la Figure 5, les barreaux de l'abattant 311, 313 de la paroi avant de la cage collective sont sensiblement horizontaux. Dans une variante de réalisation, les barreaux de l'abattant peuvent être agencés selon une orientation sensiblement verticale, c'est-à-dire perpendiculaire aux barreaux horizontaux de la Figure 5. Les deux espaces de la cage sont séparés par une cloison arrière commune 301 apte à se déplacer pour forcer les palmipèdes à avancer vers l'avant de la cage collective. Toutes les parois comprennent des barreaux 314 sensiblement verticaux.

Le plancher de la cage collective est référencé 312. Une partie de ce plancher est destinée à être recouverte par le plancher 110 de la cage de transport et par la façade arrière 120 de la cage de transport lorsque celle-ci est abaissée. Lorsque la façade arrière 120 de la cage de transport est abaissée, elle fait alors partie intégrante du plancher 312 de la cage collective. Le plancher 312 de la cage collective représentée sur la Figure 5, se présente sous forme d'un maillage. Dans une variante, la zone du plancher 312, destinée à être recouverte par le plancher 110 et la façade arrière 120 de la cage de transport 100, peut ne comporter qu'un agencement de barreaux, parallèles entre eux et régulièrement espacés. Dans ce cas, les barreaux de la façade arrière 120 de la cage de transport 100 sont de préférence réalisés de manière telle, qu'en position abaissée, ils soient orientés perpendiculairement à ceux du plancher 312 de la cage collective 300, afin de former un maillage. Un tel maillage constitue un plancher confortable pour les palmipèdes.

Grâce à la cage de transport qui vient d'être décrite, les manipulations des palmipèdes, en vue de leur transport d'un lieu vers un autre, sont considérablement réduites. En effet, une fois installés dans la cage de transport, les palmipèdes sont transportés d'une cage collective à une autre, grâce à la même cage de transport qui s'insère dans les différentes cages collectives. L'état de stress des animaux est donc considérablement réduit. Les cages collectives existantes subissent seulement une petite adaptation en partie basse, par la création d'un logement destiné à recevoir la cage de transport, le reste des cages collectives restant inchangé.

## Revendications

1. Cage de transport (100) de volailles comprenant un plancher (110) ajouré, une façade avant (150), une façade arrière (120), deux parois latérales (140) dont l'une au moins comprend une trappe latérale (141), et un couvercle (130) pourvu d'une trappe supérieure (131), ladite cage de transport étant **caractérisée en ce que** :
- la façade arrière (120) est mobile en rotation, autour d'un axe (122) situé le long du bord arrière dudit plancher (110), entre une position fermée où ladite façade arrière est relevée et une position ouverte où ladite façade arrière est abaissée dans le prolongement dudit plancher,
- le couvercle (130) est mobile en translation entre une position fermée et une position ouverte où ledit couvercle est déplacé vers ladite façade avant (150).

2. Cage de transport selon la revendication 1, **caractérisée en ce que** le couvercle (130) comprend des ergots situés aux extrémités de son bord arrière, lesdits ergots étant aptes à coulisser le long de rails latéraux (132) pratiqués le long des parois latérales (140).

3. Cage de transport selon la revendication 2, **caractérisée en ce que** les rails latéraux (132) sont évasés à leur extrémité avant, située du côté de ladite façade avant (150), pour permettre un retrait desdits ergots de leurs rails respectifs.

4. Cage de transport selon l'une des revendications 1 à 3, **caractérisée en ce que** la trappe (131) du couvercle s'ouvre en rotation, autour d'un axe coplanaire audit couvercle (130), et bascule vers ladite façade arrière (120) de ladite cage de transport, alors que ledit couvercle (130) s'ouvre en coulissant vers ladite façade avant (150) de ladite cage de transport.

5. Cage de transport selon l'une des revendications 1 à 4, **caractérisée en ce qu'**elle comprend en outre un système distant de fermeture de ladite façade arrière (120), ledit système de fermeture comprenant au moins un câble (121) fixé à ladite façade arrière (120), ledit au moins un câble (121) étant disposé le long d'au moins un guide prévu dans au moins une paroi latérale et débouchant sur ladite façade avant.

6. Cage de transport selon les revendications 2 et 5, **caractérisée en ce que** ledit au moins un guide est confondu avec au moins un rail latéral (132) de coulissement dudit couvercle (130).

7. Cage de transport selon l'une quelconque des revendications précédentes, **caractérisée en ce que** chaque trappe et paroi mobile est pourvue d'un système de verrouillage choisi parmi au moins l'un des moyens suivants : clips, ressort de rappel, loquet.

8. Cage de transport selon l'une quelconque des revendications précédentes, **caractérisée en ce qu'**elle est réalisée dans l'un au moins des matériaux suivants : polyéthylène haute densité (PEHD), acrylonitrile butadiène styrène (ABS), acier galvanisé ou acier inoxydable.

9. Cage collective (200 ; 300) pour le gavage de palmipèdes, comportant un plancher (230, 312), deux parois latérales, une paroi arrière (201 ; 301), au moins une paroi avant (211, 221 ; 311, 313) dont au moins une partie comprend un abattant mobile autour d'un axe de rotation (212, 222 ; 316, 317), entre une position relevée (A) et une position abaissée (B), ladite cage collective étant **caractérisée en ce qu'**elle comprend en outre au moins un logement, situé entre ledit plancher (230, 312) et ledit axe de rotation (212, 222 ; 316, 317) de l'abattant mobile de ladite paroi avant, ledit logement comprenant une cage de transport (100) de volailles, amovible, selon l'une des revendications 1 à 8.

10. Cage collective selon la revendication 9, **caractérisée en ce qu'**elle comprend un système de confinement apte à forcer les palmipèdes à avancer vers sa paroi avant et à les faire entrer dans une zone délimitée par le plancher (110) de ladite cage de transport (100).

11. Cage collective selon l'une quelconque des revendications 9 à 10, **caractérisée en ce que** lorsque la cage de transport (100) est insérée dans son logement, son couvercle (130) est coulissé vers sa façade avant (150) et dépasse vers l'extérieur de ladite cage collective (200).

12. Cage collective selon la revendication 11, **caractérisée en ce qu'**une fois la cage de transport (100) insérée dans son logement, son couvercle (130) est retiré.
